# EUROPÄISCHE PATENTSCHRIFT

(11) **EP 2 233 378 B1**
(45) Veröffentlichungstag und Bekanntmachung des Hinweises auf die Patenterteilung: **18.01.2012**
(21) Anmeldenummer: 10157374.9
(22) Anmeldetag: 23.03.2010
(51) Int. Cl.: B61C 17/04, B60R 21/045

(54) **Kopfwagen eines Schienenfahrzeugs**
Head wagon of a rail vehicle
Voiture de tête d'un véhicule ferroviaire

(30) Priorität: 26.03.2009 DE 102009015012
(43) Veröffentlichungstag der Anmeldung: 29.09.2010
(73) Patentinhaber: Siemens Aktiengesellschaft, 80333 München (DE)
(72) Erfinder: Vogeley, Thomas, 34376 Immenhausen (DE)

(56) Entgegenhaltungen:
- DE-B3- 10 314 603
- FR-A1- 2 918 617
- GB-A- 1 316 722

## Beschreibung

Die Erfindung bezieht sich auf einen Kopfwagen eines Schienenfahrzeugs, mit einem Fahrerstand, der mit einem Bedienpult ausgestattet ist, mit den Merkmalen des Oberbegriffs des Anspruchs 1.

solch ein kopfusgen ist aus der FR 2 918 617 bekannt.

Das Bedienpult eines solchen Kopfwagens hat typischerweise Kanten, die im Falle eines Unfalls Verletzungsrisiken für eine Bedienperson des Schienenfahrzeugs mit sich bringen.

Es wird daher als wünschenswert angesehen, den Fahrerstand eines solchen Kopfwagens so zu gestalten, dass Verletzungen der Bedienperson auch im Unfalle möglichst vermieden werden.

Ausgehend hiervon liegt der Erfindung die Aufgabe zu Grunde, den eingangs genannten Kopfwagen derart weiterzuentwickeln, dass sich günstige Bedingungen für eine Vermeidung von Verletzungen bei einem Unfall ergeben.

Diese Aufgabe wird dadurch gelöst, dass der vorben ein auf das Bedienpult gerichtetes Keilelement und ein zwischen dem Keilelement und dem Bedienpult angeordnetes Verformteil aufweist, das derart ausgebildet ist, dass es bei Beaufschlagung des Keilelements mit einer in Richtung des Bedienpultes gerichteten Kraft gespreizt wird.

Der besonders gestaltete Vorbau des Bedienpultes hat die Eigenschaft, bei einer Beaufschlagung mit Kraft, beispielsweise wenn die Bedienperson gegen den Vorbau prallt, nachgiebig zu sein. Dabei ist hervorzuheben, dass das Keilelement bei seiner Bewegung in Richtung auf das Bedienpult ein Aufspreizen des Verformteils bewirkt, so dass die Aufschlagzone mit zunehmender Spreizung des Verformteils vorzugsweise seitlich vergrößert wird.

Bevorzugt ist das Keilelement abgestumpft und das Verformteil weist eine zentrale Vertiefung auf, deren Form an die Form des Keilelements angepasst ist. Auf diese Weise ist gewährleistet, dass ein Eindringen des Keilelements in die Vertiefung in einfacher Weise ein Aufspreizen des Verformteils nach sich zieht.

In Grundstellung des Vorbaus kann die Vertiefung des Verformteils zunächst parallel zu den Keilflächen des Keilelements und sodann im spitzen Winkel zu einer Mittelebene des Vorbaus verlaufen. Dies bedeutet, dass bei einem Unfall das Keilelement zunächst ein starkes Spreizen des Verformteils bewirkt und bei weiterem Eindringen in die Vertiefung äußere Bereiche des Verformteils weiter nach außen gedrückt werden.

Der Vorbau ist günstiger Weise symmetrisch bezüglich seiner Mittelebene. Dies bedeutet, dass die Vergrößerung der Aufschlagzone bei Eindringen des Keilelements in das Verformteil ebenfalls symmetrisch erfolgt. Während die Aufschlagzone im Grundzustand des Vorbaus in erster Linie von der Außenseite des Keilelements gebildet wird, setzt sich die Aufschlagzone bei eingedrücktem Keilelement aus dessen Außenseite und der Außenseite angrenzender Flächen des Verformteils zusammen.

Günstiger Weise ist der Vorbau mit seinem Verformteil an dem Bedienpult befestigt. Er kann beispielsweise angeschraubt sein.

Das Verformteil kann mit Material gefüllte Kammern aufweisen. Wenn beispielsweise ein körniges Material verwendet wird, ist eine geeignete Verformung des Verformteils aufgrund der Spreizung ohne weiteres möglich. Es ist auch denkbar, dass die Kammern hohl sind.

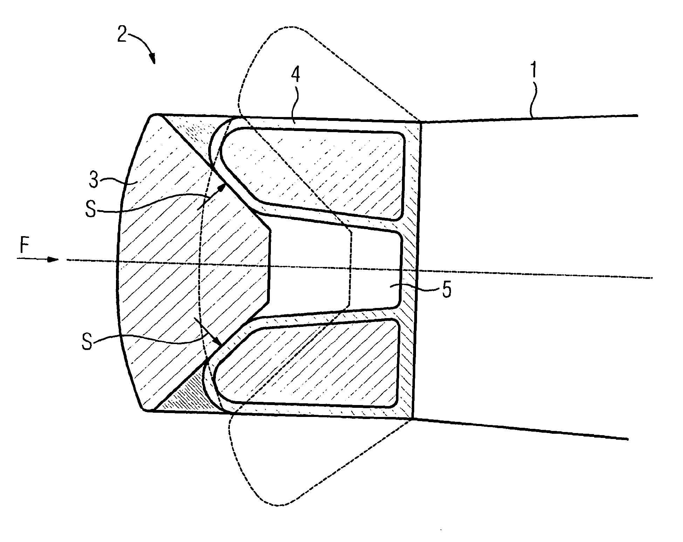

Ein Ausführungsbeispiel der Erfindung wird nachfolgend unter Bezugnahme auf die Zeichnung noch näher erläutert.

Die einzige Figur zeigt eine schematische Ansicht von oben auf ein Bedienpult mit Vorbau in einem Kopfwagen eines Schienenfahrzeugs.

Die Darstellung der Figur zeigt ein Bedienpult 1, das mit einem nachgiebigen Vorbau 2 ausgestattet ist. Eine Bedienperson für das Bedienpult 1 würde sich im Betriebsfalle links von dem Vorbau 2 befinden.

Erfährt die Bedienperson bei einem Unfall eine Beschleunigung in Richtung auf das Bedienpult 1, prallt sie gegen ein Keilelement 3 des Vorbaus 2, das aus nachgiebigem Material hergestellt ist. Die auf die Bedienperson in einem solchen Fall wirkende Kraft ist in der Figur durch den Pfeil F symbolisiert.

Durch Einwirkung der Kraft F auf das Keilelement 3 wird letzteres in Richtung auf ein Verformteil 4 des Vorbaus 2 verschoben. Das Verformteil 4 weist eine zentrale Vertiefung 5 auf, deren Boden entsprechend einer Stirnfläche des abgestumpften Keilelements 3 bemessen ist.

Pfeile S in der Figur zeigen eine Krafteinleitung von dem Keilelement 3 in das angrenzende Verformteil 4. In diesem Bereich liegen das Verformteil 4 und das Keilelement 3 zur Krafteinleitung aneinander an.

Mit zunehmendem Versatz des Keilelements 3 in die Vertiefung 5 des Formteils 4 wird das Verformteil 4 derart gespreizt, dass seine äußeren Materialbereiche im Vergleich zu einer Grundstellung einen größeren Abstand zu einer mittleren Längsebene des Vorbaus 2 aufweisen. In der Figur ist gestrichelt die Lage des Verformteils 4 in etwa maximal gespreiztem Zustand dargestellt. Es ergibt sich, dass eine Gesamtaufprallzone für die Bedienperson gegenüber der mit durchgezogenen Linien dargestellten Grundstellung erheblich vergrößert ist.

In der Grundstellung besitzt das Vorformteil Seitenwände, die parallel zur mittleren Längsebene verlaufen. Die Wände der Vertiefung 5 verlaufen von deren Boden aus zunächst im spitzen Winkel zu der Ebene und Knicken in Nähe des Keilelements 3 nach außen ab. Seitliche Abmessungen des Verformteils 4 und des Keilelement 3 sind in der Grundstellung etwa gleich.

Der Vorbau 2 ist insgesamt symmetrisch bezüglich seiner mittleren Längsebene. Die an die Vertiefung 5 angrenzenden Bereiche des Verformteils 4 sind als Kammern ausgeführt, die mit einem gegebenenfalls körnigen Material gefüllt sind.

Das Verformteil 4 ist an einer Anschraubfläche des Bedienpultes 1 befestigt. Das Keilelement kann mit einer Verschraubung durch das Verformteil 4 hindurch am Bedienpult 1 befestigt sein, ggf. unter Vorspannung. Diese Verschraubung wird im Belastungsfall in das Innere des Pultes gedrückt.

## Patentansprüche

1. Kopfwagen eines Schienenfahrzeugs, mit einem Fahrerstand, der mit einem Bedienpult (1) ausgestattet ist, und
das Bedienpult (1) eine Aufschlagzone für einen Bauchund/oder Brustbereich einer Bedienperson aufweist, wobei die Aufschlagzone von einem nachgiebig gestalteten Vorbau (2) des Bedienpultes (1) gebildet ist **dadurch gekennzeichnet, dass** der Vorbau (2) ein auf das Bedienpult (1) gerichtetes Keilelement (3) und ein zwischen dem Keilelement (3) und dem Bedienpult (1) angeordnetes Verformteil (4) aufweist, das derart ausgebildet ist, dass es bei Beaufschlagung des Keilelements (3) mit einer in Richtung des Bedienpultes (1) gerichteten Kraft (F) gespreizt wird.

2. Kopfwagen nach Anspruch 1,
**dadurch gekennzeichnet, dass**
das Keilelement (3) abgestumpft ist und das Verformteil (4) eine zentrale Vertiefung (5) aufweist, deren Form an die Form des Keilelements (3) angepasst ist.

3. Kopfwagen nach einem der Ansprüche 1 oder 2,
**dadurch gekennzeichnet, dass**
in Grundstellung des Vorbaus (2) die Vertiefung (5) des Verformteils (4) zunächst parallel zu den Keilflächen des Keilelements (3) und sodann in spitzem Winkel zu einer Mittelebene des Vorbaus (2) verläuft.

4. Kopfwagen nach einem der Ansprüche 1 bis 3,
**dadurch gekennzeichnet, dass**
der Vorbau (2) symmetrisch bezüglich seiner Mittelebene ist.

5. Kopfwagen nach einem der vorhergehenden Ansprüche 1 bis 4,
**dadurch gekennzeichnet, dass**
der Vorbau (2) mit seinem Verformteil (4) an dem Bedienpult (1) befestigt ist.

6. Kopfwagen nach einem der vorhergehenden Ansprüche 1 bis 5,
**dadurch gekennzeichnet, dass**
das Verformteil (4) mit Material gefüllte Kammern aufweist.

## Claims

1. Head wagon of a rail vehicle, having a driver's cab which is equipped with a control console (1), and the control console (1) has an impact zone for the abdominal region and/or chest region of an operator, wherein the impact zone is formed by a front structure (2), shaped in any desired way, of the control console (1), **characterized in that** the front structure (2) has a wedge element (3) which is directed toward the control console (1) and a deformable component (4) which is arranged between the wedge element (3) and the control console (1) and is embodied in such a way that when the force (F) which is directed in the direction of the control console (1) is applied to the wedge element (3) said deformable component (4) is meant to expand.

2. Head wagon according to Claim 1,
**characterized in that**
the wedge element (3) is truncated, and the deformable component (4) has a central depression (5) whose shape is adapted to the shape of the wedge element (3).

3. Head wagon according to one of Claims 1 or 2,
**characterized in that**
in the basic position of the front structure (2) the depression (5) of the deformable component (4) initially runs parallel to the wedge faces of the wedge element (3) and then runs at an acute angle with respect to a centre plane of the front structure (2).

4. Head wagon according to one of Claims 1 to 3,
**characterized in that**
the front structure (2) is symmetrical with respect to its centre plane.

5. Head wagon according to one of the preceding Claims 1 to 4,
**characterized in that**
the front structure (2) is attached by its deformable component (4) to the control console (1).

6. Head wagon according to one of the preceding Claims 1 to 5,
**characterized in that**
the deformable component (4) has chambers which are filled with material.

## Revendications

1. Voiture de tête d'un véhicule ferroviaire comprenant une cabine de conducteur qui est équipée d'un pupitre ( 1 ) de commande et le pupitre ( 1 ) de commande a une zone de choc pour une partie de ventre et/ou de torse d'un opérateur, la zone de choc étant formée d'une avancée ( 2 ), conformée de manière à céder, du pupitre ( 1 ) de commande,
**caractérisée en ce que**
l'avancée ( 2 ) comporte un élément ( 3 ) de coin dirigé sur le pupitre ( 1 ) de commande et une partie ( 4 ) de déformation disposée entre l'élément ( 3 ) de coin et le pupitre ( 1 ) de commande est constitué de manière à s'écarter lorsque l'élément ( 3 ) de coin est soumis à une force ( F ) dirigée dans la direction du pupitre ( 1 ) de commande.

2. Voiture de tête suivant la revendication 1,
**caractérisée en ce que**
l'élément ( 3 ) de coin est tronqué et l'élément ( 4 ) de déformation a une cavité ( 5 ) centrale dont la forme est adaptée à celle de l'élément ( 3 ) de coin.

3. Voiture de tête suivant l'une des revendications 1 ou 2,
**caractérisée en ce que**
dans la position normale de l'avancée ( 2 ), la cavité ( 5 ) de la partie ( 4 ) de déformation s'étend d'abord parallèlement aux surfaces de coin de l'élément ( 3 ) de coin, puis fait un angle aigu avec un plan médian de l'avancée ( 2 ).

4. Voiture de tête suivant l'une des revendications 1 à 3,
**caractérisée en ce que**
l'avancée ( 2 ) est symétrique par rapport à son plan médian.

5. Voiture de tête suivant l'une des revendications précédentes 1 à 4,
**caractérisée en ce que**
l'avancée ( 2 ) est fixée par sa partie ( 4 ) de déformation au pupitre ( 1 ) de commande.

6. Voiture de tête suivant l'une des revendications précédentes 1 à 5,
**caractérisée en ce que**
la partie ( 4 ) de déformation comporte des chambres garnies de matière.
